# EUROPÄISCHE PATENTSCHRIFT

(11) **EP 1 190 181 B1**
(45) Veröffentlichungstag und Bekanntmachung des Hinweises auf die Patenterteilung: **09.02.2005**
(21) Anmeldenummer: 00935179.2
(22) Anmeldetag: 07.06.2000
(51) Int. Cl.: F16D 69/00

(54) **VERFAHREN ZUM HERSTELLEN VON REIBBELÄGEN**
METHOD FOR PRODUCING FRICTION LININGS
PROCEDE DE PRODUCTION DE GARNITURES DE FRICTION

(30) Priorität: 29.06.1999 DE 19929698
(43) Veröffentlichungstag der Anmeldung: 27.03.2002
(73) Patentinhaber: TMD Friction GmbH, 51381 Leverkusen (DE)
(72) Erfinder: HOGENKAMP, Wolfgang, D-42855 Remscheid (DE); POLLMANN, Ernst, D-51377 Leverkusen (DE)
(74) Vertreter: Dallmeyer, Georg, Dipl.-Ing.
(86) Internationale Anmeldenummer: PCT/EP2000/005217
(87) Internationale Veröffentlichungsnummer: WO 2001/002746

(56) Entgegenhaltungen:
- GB-A- 2 328 640

## Beschreibung

Die Erfindung betrifft ein Verfahren zum Herstellen von Reibbelägen nach dem Oberbegriff des Anspruchs 1.

Das Pressen der Reibbeläge aus einer Reibmaterialmischung erfolgt in einer Presse in einem Preßvorgang mit mindestens einem Preßzyklus, wobei eine Pressensteuerung mehrere Prozeßparameter als Stellgrößen einzeln oder in Kombination zum Erreichen einer vorgegebenen Belageigenschaft der Reibbeläge steuert. Diese Belageigenschaft kann beispielsweise aus der Kompressibilität des Reibbelages, der Dichte, der E-Module in den Dreiraumkoordinaten, oder aus den Maßen des Reibbelages bestehen.

Qualitätsschwankungen der Reibmaterialmischung, Werkzeugverschleiß, Temperaturänderung im Preßwerkzeug, sowie Toleranzen der Pressensteuerung sind Störgrößen, die die Belageigenschaft der Reibbeläge erheblich beeinflussen können, selbst wenn alle übrigen Prozeßparameter konstant bleiben.

Aus der GB-A-2328640 ist ein Verfahren zum Herstellen von Reibbelägen bekannt, bei dem in einer Experimentierphase verschiedene Temperaturen, Pressdrücke und Lüftungszeiten experimentell ermittelt werden, um eine bestimmte Reibbelagdichte und dimension zu erreichen. Die in den Versuchen ermittelten Daten werden dann in einer Steuereinrichtung gespeichert, wobei die Steuerungseinrichtung während des Pressens den Reaktionsdruck in Abhängigkeit von der Zeit einschließlich der Press- und Lüftungszeiten überwacht und diese überwachten Daten mit dem gespeicherten Parametern vergleicht. Aufgrund des Vergleichs der Parameter entscheidet die Steuereinrichtung, ob der hergestellte Reibbelag maßhaltig ist, oder ob der hergestellte Reibbelag als Ausschussmaterial verworfen werden muss. Eine Steuerung der Prozessparameter ist nicht vorgesehen.

Der Erfindung liegt daher die Aufgabe zugrunde, ein Verfahren zum Herstellen von Reibbelägen zu schaffen, mit der Fehlproduktionen verringert werden und die Reproduzierbarkeit der Reibbelageigenschaften erhöht wird.

Zur Lösung dieser Aufgabe dienen die Merkmale des Anspruchs 1.

Die Erfindung sieht in vorteilhafter Weise vor, daß mindestens ein für die Belageigenschaft der Reibbeläge repräsentativer Kennwert in einem einzigen Preßzyklus oder in mehreren Preßzyklen gemessen wird, und daß die Prozeßparameter als Stellgrößen in Abhängigkeit mindestens eines repräsentativen gemessenen Kennwertes für den aktuellen Preßzyklus, für die nachfolgenden Preßzyklen und/oder nachfolgenden Preßvorgänge gesteuert werden. Die Erfindung hat demzufolge zum Ziel, die Kennwerte während des Preßvorganges meßtechnisch zu erfassen und die so gewonnenen Daten zur unmittelbaren Steuerung der Presse heranzuziehen. Qualitätsschwankungen der Mischung, Werkzeugverschleiß, Temperaturänderung im Preßwerkzeug, sowie Toleranzen der Pressensteuerung können auf diese Weise in einem weiten Rahmen ausgeglichen werden, wodurch die Belageigenschaft als Regelgröße konstant gehalten werden kann. Auf diese Weise werden Fertigungsschwankungen hinsichtlich der Belageigenschaften minimiert und eine hohe Reproduzierbarkeit der Belagqualität erreicht. Das erfindungsgemäße Verfahren ermöglicht eine Verbesserung der Automatisierung des Produktionsprozesses, insbesondere in Verbindung mit einem Prozeßleitstand für eine Vielzahl von Pressen.

Als Stellgrößen können der Weg des Preßstempels, der Stempeldruck, die Preß- und Lüftungszeit und die Preßtemperatur einzeln oder in Kombination verwendet werden. Diese Prozeßparameter können an der Presse separat gemessen und von der Pressensteuerung gesteuert werden. Beispielsweise können der Stempeldruck, die Preß- und Lüftungszeit und die Preßtemperatur in Kombination innerhalb vorgegebener Grenzen nachgeregelt werden.

Weiterhin können als Stellgrößen die Zusammensetzung der Reibmaterialmischung, insbesondere der Harzgehalt der Reibmaterialmischung, und/oder die Menge der Reibmaterialmischung und/oder die Menge einer die Zwischenschicht bildenden Reibmaterialmischung verwendet werden. Auf diese Weise können Qualitätsschwankungen der Reibmaterialmischung und/oder die Einwaage der Reibmaterialmischung optimiert werden.

Der für die Belageigenschaft der Reibbeläge repräsentative Kennwert kann nach einem ersten Ausführungsbeispiel der Erfindung aus einer sich bei Messung des Stempeldrucks in Abhängigkeit von dem Weg des Preßstempels ergebende Hystereseschleife eines oder mehrerer Preßzyklen gewonnen werden.

Die Messung des Stempeldrucks beim Öffnen und Schließen des Preßwerkzeuges in Abhängigkeit von dem Weg des Preßstempels ergibt eine Hystereseschleife, deren Kennwerte in direkter Korrelation zur Belageigenschaft des gepreßten Reibbelages, insbesondere zur Kompressibilität des Reibbelages, stehen. Beispielsweise kann der Meßwert des Flächeninhaltes der Hystereseschleife als repräsentative Kennwert unmittelbar zur Pressensteuerung verwendet werden.

Alternativ kann der der repräsentative Kennwert aus dem Fließweg des Preßstempels nach Erreichen eines vorgegebenen maximalen Stempeldrucks sein. Bei Erreichen dieses vorgegebenen Stempeldrucks erfolgt eine Messung des ab diesem Zeitpunkt zurückgelegten weiteren Stempelweges bis zum Stillstand des Preßstempels.

Nach einer weiteren Alternative kann für die Belageigenschaft der Reibbeläge der Maximalwert des Stempelweges als repräsentativer Kennwert verwendet werden.

Der repräsentative Kennwert kann auch aus der Steigung des Entlastungskurvenabschnitts der sich bei Messung des Stempeldrucks in Abhängigkeit von dem Weg des Preßstempels ergebenen Hystereseschleife sein.

Nach einem zweiten Ausführungsbeispiel kann der für die Belageigenschaft der Reibbeläge repräsentative Kennwert aus einer sich bei Messung des Stempeldrucks in Abhängigkeit von dem Radialdruck auf die Werkzeuginnenwand der Form ergebenden Hysteresekurve gewonnen werden.

Der Kennwert kann beispielsweise der Flächeninhalt dieser Hysteresekurve oder der Maximalwert des Radialdrucks auf die Werkzeuginnenwand der Form sein.

Desweiteren kann der repräsentative Kennwert aus der Druckdifferenz des Radialdrucks auf die Werkzeuginnenwand der Form nach Erreichen eines vorgegebenen maximalen Stempeldrucks bestehen.
Diese Druckdifferenz korreliert gut mit der Kompressibilität der Reibbeläge.

Generell kann der repräsentative Kennwert aus dem Steigungswert eines vorbestimmten Kurvenabschnitts der Hystereseschleife bestehen, die sich bei Messung des Stempeldrucks in Abhängigkeit von dem Weg des Preßstempels oder bei Messung des Stempeldrucks in Abhängigkeit von dem Radialdruck auf die Werkzeuginnenwand ergibt.

Es ist möglich, mit Hilfe der Messung der Ist-Preßzeit und der Messung des Radialdrucks auf die Werkzeuginnenwand in jedem Preßzyklus einen vorbestimmten Druckaufbau zeitlich zu regeln.

Durch die Messung der tatsächlichen Ist-Preßzeiten können die Soll-Preßzeiten exakt eingehalten werden. Abweichungen von Form zu Form und/oder von Presse zu Presse können individuell ausgeglichen werden, ebenso Abweichungen bezüglich des Druckaufbaus und der Betriebstemperatur der Presse.

Der Druckaufbau und die Druckentlastung der Hysteresekurve nach dem ersten und zweiten Ausführungsbeispiel kann durch zeitliche Steuerung des Stempeldrucks derart geregelt werden, daß die Steigung der Druckaufbaukurve und der Druckentlastungskurve annähernd gleich sind.

Über eine Temperaturmessung kann die Energieaufnahme der Reibmaterialmischung gemessen werden und das Temperaturmeßsignal zur Steuerung der Preßtemperatur als Stellgröße verwendet werden.

Alternativ kann die Strahlungswärme des nach dem Preßvorgang ausgestoßenen Reibbelages gemessen werden und dieses Temperaturmeßsignal zur Steuerung der Preßtemperatur als Stellgröße verwendet werden.

Nach einer weiteren Alternative kann die elektrische Heizleistung der Presse gemessen werden, wobei dieses Meßsignal die Preßtemperatur als Stellgröße steuert.

Hinsichtlich der Belageigenschaften kann als Regelgröße die Kompressibilität, die Dichte, die E-Module in den drei Raumkoordinaten oder die Maße des Reibbelages oder eine Kombination der vorgenannten Belageigenschaften verwendet werden.

Das vorgenannte Verfahren eignet sich auch als Prüfverfahren für Reibbelagmischungen. Auf diese Weise kann die Reproduzierbarkeit der Reibmaterialqualität vor dem Verpressen überprüft werden und die Reibmaterialmischung ggf. korrigiert werden.

Im folgenden werden unter Bezugnahme auf die Zeichnungen Ausführungsbeispiele der Erfindung näher erläutert.

Es zeigen:
- Fig. 1: eine schematische Darstellung der Form in einer Presse,
- Fig. 2: einen Preßzyklus gemäß einem ersten Ausführungsbeispiel, wobei der Stempeldruck in Abhängigkeit vom Stempelweg aufgezeichnet ist,
- Fig. 3: die Korrelation zwischen der Kompressibilität des Reibbelages und der Fläche der Stempeldruckkurve gemäß Fig. 2,
- Fig. 4: ein Preßzyklus gemäß einem zweiten Ausführungsbeispiel, bei dem der Stempeldruck in Abhängigkeit von dem Radialdruck aufgezeichnet ist, und
- Fig. 5: die Korrelation zwischen der Kompressibilität des Reibbelages in Abhängigkeit von seinem Fließverhalten wie in Fig. 4 ersichtlich.

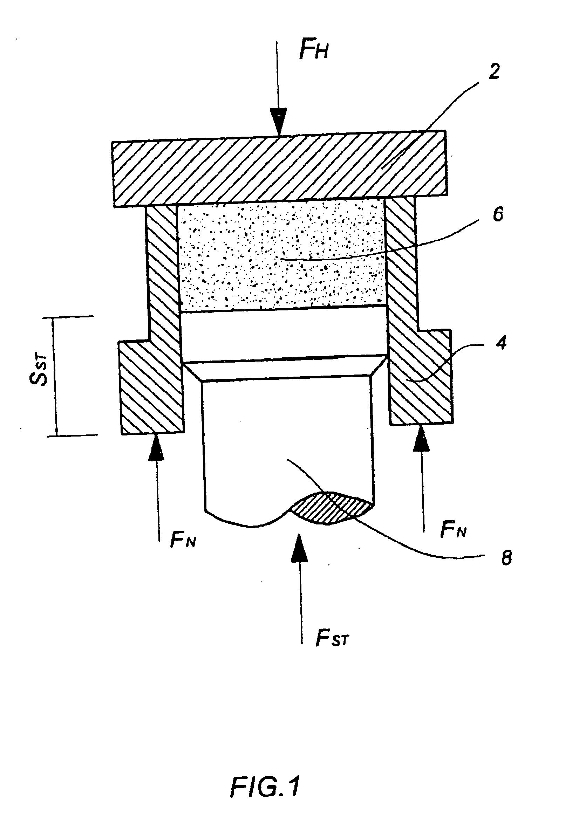

Fig. 1 zeigt schematisch die Preßform einer Presse mit einer Heizplatte 2, einer Matrize bzw. Werkzeug 4 und einem in dem Werkzeug beweglichen Preßstempel 8. Die Reibmaterialmischung 6, in der von dem Werkzeug 4 umgebenen Preßform wird durch den mit einer vorbestimmten Stempelkraft F_{ST} zugestellten Preßstempel 8 verdichtet, wobei die Heizplatte 2 mit einer Verschlußkraft F_{H} und die Matrize 4 mit einer Niederhaltekraft F_{N} gegeneinander gedrückt werden. An dem Werkzeug 4 können der von der Reibmaterialmischung 6 ausgeübte Radialdruck beispielsweise als Normalkraft auf die Werkzeuginennwand sowie die Temperatur der Reibmaterialmischung gemessen werden.

Die Pressensteuerung kann zumindest folgende Prozeßparameter als Stellgrößen steuern: Stempelweg Sₛₜ, Stempeldruck (Stempelkraft Fₛₜ), Preß- und Lüftungszeit und Preßtemperatur.

Diese Stellgrößen werden außerdem zwecks Einhaltung der Sollwerte gemessen. Außerdem wird der in der Preßform herrschende Radialdruck beim Pressen erfaßt.

Weiterhin können als Stellgrößen unter anderem der Harzgehalt der Reibmaterialmischung 6 und/oder die Menge der Einwaage der Reibmaterialmischung 6 verändert werden.

Während des Preßvorgangs werden wichtige Prozeßparameter meßtechnisch erfaßt und zusätzlich der sich in der Preßform ergebende Radialdruck gemessen.

Die Prozeßsteuerung soll mit einem für die Belageigenschaft der Reibbeläge repräsentativen Kennwert erfolgen, der in einem ersten Preßzyklus oder in mehreren Preßzyklen eines Preßvorganges gemessen wird. Unter einem Preßvorgang wird das Verpressen der Reibmaterialmischung zu einem Reibbelag verstanden, wobei dieser Preßvorgang aus einem oder mehreren Preßzyklen bestehen kann, die mit einer Lüftungszeit von einander getrennt sind. Jeder Preßzyklus besteht aus einer Druckaufbauphase, einer Haltephase in der ein bestimmter Stempeldruck aufrechterhalten wird und einer Druckentlastungsphase.

Die während eines Preßzyklus ermittelten Meßwerte der Prozeßparameter und des Radialdrucks werden der Pressensteuerung zugeführt, die die als Stellgrößen verwendeten Prozeßparameter unmittelbar für den nächsten Preßzyklus verändern kann.

Alternativ werden die Meßdaten einer vorbestimmten Anzahl von Preßzyklen oder Preßvorgänge gesammelt und insgesamt, z.B. durch Mittelwertbildung, zur Pressensteuerung verwendet. Alle Meßdaten können auch zur Erstellung von auf den Kennwert bezogenen Kennfeldern gespeichert werden, um den Einfluß unterschiedlicher Stellgrößen auf einen Kennwert zu erfassen. Diese Kennfelder können dann verwendet werden, um beispielsweise mehrere Stellgrößen gleichzeitig zu verändern und die Pressensteuerung zu optimieren.

In einem ersten Ausführungsbeispiel ist vorgesehen, daß der für die Belageigenschaft der Reibbeläge repräsentative Kennwert aus einer sich bei Messung des Stempeldrucks in Abhängigkeit von dem Weg des Preßstempels ergebenden Hysteresekurve eines oder mehrerer Preßzyklen gewonnen wird.

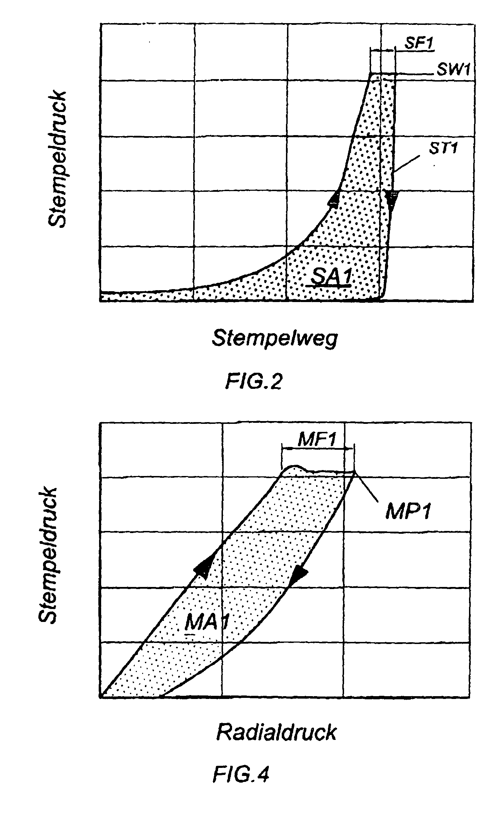

In Fig. 2 ist die Abhängigkeit des Stempeldrucks von dem Stempelweg Sₛₜ Stempeldruck berechnet sich dabei aus der Stempelkraft F_{ST} und der Stempelfläche. Die Meßwerte über Stempeldruck und Stempelweg beim Öffnen und Schließen des Preßwerkzeuges ergeben eine Hysteresekurve. Der Flächeninhalt SA1 der Hysteresekurve, der Fließweg SF1, die Steigung der Entlastungskurve ST1 und der Maximalwert des Stempelweges SW1 können unmittelbar als Kennwerte zur Pressensteuerung herangezogen werden, zumal alle Meßwerte unmittelbar nach einem Preßvorgang zur Verfügung stehen und eine enge Korrelation zu den konstant zu haltenden Belageigenschaften aufweisen.

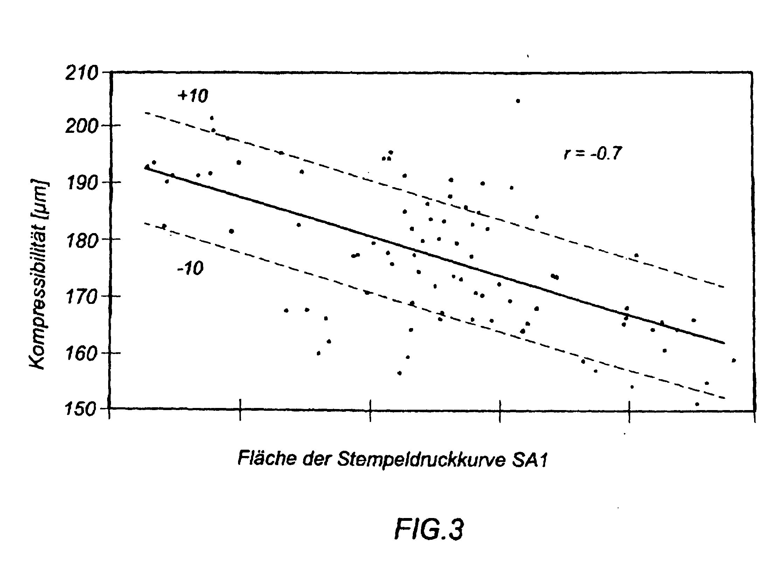

Fig. 3 zeigt beispielsweise die Korrelation zwischen der Kompressibilität als Belageigenschaft des Reibbelages und der Fläche SA1 der Stempeldruckkurve gemäß Fig. 2. Der Korrelationskoeffizient beträgt 0,7, so daß die Fläche SA1 ein geeigneter repräsentativer Kennwert zur Regelung der Kompressibilität ist. Die Presse kann auf diese Weise hinsichtlich Druckaufbau und Druckentlastung, Preß- und Lüftungszeit und Preßtemperatur so gesteuert werden, daß eine hohe Reproduzierbarkeit der Belageigenschaften erreicht wird.

Nach einem zweiten Ausführungsbeispiel ist vorgesehen, daß der für die Belageigenschaft der Reibbeläge repräsentative Kennwert aus einer sich bei Messung des Stempeldrucks in Abhängigkeit von dem Radialdruck auf die Werkzeuginnenwand der Preßform ergebenden Hysteresekurve eines oder mehrerer Preßzyklen gewonnen wird.

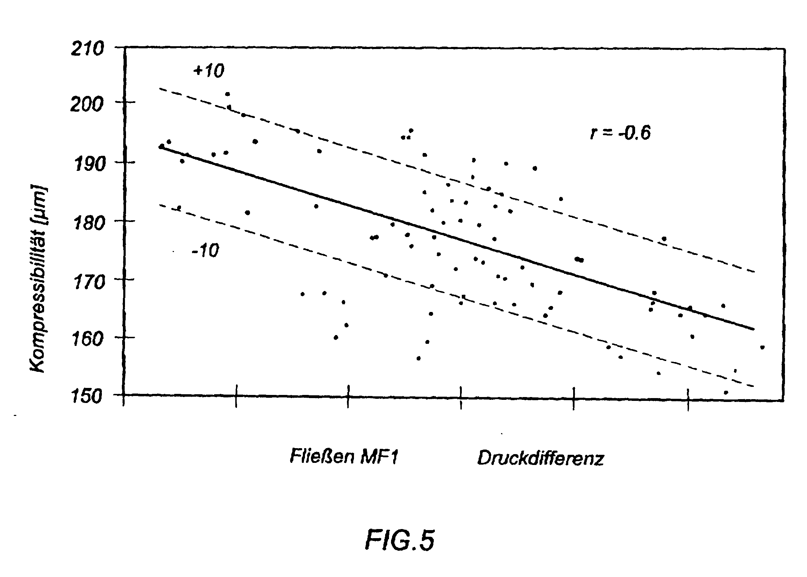

Fig. 4 zeigt den Druckverlauf in einem Preßzyklus beim Öffnen und anschließendem Schließen des Preßwerkzeuges, wobei der Stempeldruck in Abhängigkeit von dem Radialdruck auf die Werkzeuginnenwand aufgetragen ist. Es ergibt sich wiederum eine Hysteresekurve, deren Fläche mit MA1 gekennzeichnet ist. Wie aus dem Diagramm ersichtlich, wird der Stempeldruck bis auf einen Wert von knapp über 20 MPa aufgebaut und anschließend für eine vorgegebene Zeitspanne konstant gehalten. Während dieser Zeit erhöht sich dennoch der Radialdruck bis zu einem Höchstwert MP1. Die Druckdifferenz MF1 des Radialdrucks bei konstantem Stempeldruck wird gemessen, wobei dieser Meßwert auch charakteristisch für das Fließverhalten der Reibmaterialmischung ist.

In Fig. 5 ist die Kompressibilität des Reibbelages in Abhängigkeit von der Druckdifferenz MF1 aufgetragen. Aus dem Diagramm ist ersichtlich, daß die Messung der Druckdifferenz MF1 des Radialdrucks eine befriedigende Korrelation zur Kompressibilität des Reibbelages aufweist. Der Korrelationskoeffizient, der in Fig. 5 gezeigten Versuchsreihe beträgt 0,6. Somit ist auch die Druckdifferenz MF1 ein geeigneter repräsentativer Kennwert.

Der Radialdruck auf die Werkzeuginnenwand resultiert aus dem viskoelastischen Eigenschaften der Reibmaterialmischung. Die Messung des Radialdrucks gibt Auskunft über die Fließfähigkeit und über den Vernetzungsverlauf der verpreßten Reibmaterialmischung. Aus diesen Messungen können Rückschlüsse auf den Harzgehalt, die Art des verwendeten Harzes, die Homogenität und dem Feuchtegrad der Reibmaterialmischung gezogen werden, so daß dadurch auch eine Mischungskontrolle erfolgen kann. Bei einer Abweichung des Radialdrucks von einem vorgegebenen Sollwert kann die Pressensteuerung beispielsweise die Lüftungsphasen zwischen zwei Preßzyklen eines Preßvorganges verändern. Diese Lüftungsphasen sind zwischen mindestens zwei Preßzyklen vorgesehen, wenn das Pressen mehrstufig erfolgt.

Durch eine geeignete Anordnung von Temperatursensoren in der Form kann die Energieaufnahme des Preßlings exakter erfaßt werden und die Meßwerte zu einer präziseren Heizungssteuerung verwendet werden. Alternativ kann die Strahlungswärme des aus der Preßform ausgestoßenen Reibbelages gemessen werden, wobei die Höhe der Temperatur und die Temperaturverteilung ein Maß für den korrekten Wärmeübergang in die Reibmaterialmischung ist. Auch diese Meßwerte sind geeignet, eine präzisere Heizungssteuerung durchzuführen.

Die beispielhaft in den Fign. 3 und 5 wiedergegebene Abhängigkeit der Regelgröße von dem repräsentativen Kennwert ist ebenso wie die Abhängigkeit des repräsentativen Kennwertes von einer der Stellgrößen in der Pressensteuerung gespeichert. Ist demzufolge eine Abweichung hinsichtlich der Belageigenschaft als Regelgröße feststellbar, kann die Pressensteuerung mit Hilfe von Algorithmen, die die Abhängigkeit des repräsentativen Kennwertes von den Stellgrößen wiedergeben, die Steuerung der Stellgrößen in einer Weise ausführen, daß eine hohe Reproduzierbarkeit der Belageigenschaft erzielbar ist.

Selbstverständlich können mehrere Stellgrößen simultan geändert werden, um den repräsentativen Kennwert auf einen gewünschten Wert hinzuführen. In diesem Fall sind in der Pressensteuerung mehrdimensionale Kennfelder gespeichert, die die Abhängigkeit des repräsentativen Kennwert von mehreren Stellgrößen enthalten und somit eine Optimierung des Preßprozesses ermöglichen. Für die Stellgrößen sind dann jeweils vorgegebene Einstellbandbreiten vorgegeben, so daß die Pressensteuerung durch die simultane Steuerung mehrerer Stellgrößen eine Optimierung des Preßvorgangs ausführen kann, ohne Extremwerte innerhalb der Einstellbandbreite der Stellgrößen auszuwählen.

Schließlich besteht auch die Möglichkeit, die Kennfelder, die die Abhängigkeit der repräsentativen Kennwerte von den Stellgrößen wiedergeben, in einem Lernzyklus ständig zu erneuern, indem die während des Pressens mit einem bestimmten Werkzeug und einer bestimmten Reibmaterialmischung festgestellten Meßwerte gespeichert werden.

Die in den Fign. 2 und 4 dargestellten Kennwerte SA1, SF1, SW1, ST1 bzw. MA1, MF1 und MP1 beziehen sich auf einen ersten Preßzyklus. Diese Kennwerte eines ersten Preßzyklus können einzeln oder in Kombination unmittelbar zur Pressensteuerung verwendet werden. Es ist aber auch möglich, die Kennwerte SA1 bis SAn, SF1 bis SFn, SW1 bis SWn, MA1 bis Man, MF1 bis MFn, und MP1 bis MPn mehrerer Preßzyklen zusammenzufassen, um den Preßprozeß zu regeln. Bevorzugt werden die bei jedem Preßzyklus anfallenden Kennwerte unmittelbar zur Korrektur der in den vorherigen Preßzyklus verwendeten Stellgrößen eingesetzt.

Das Verfahren ermöglicht es, eine Presse im Bereich ihrer Leistungsgrenze zu betreiben, die Preßzeiten zu verkürzen, die Ausschußmenge zu verringern und dabei die Reproduzierbarkeit der Belagqualität zu erhöhen. Ein wesentlicher Aspekt ist dabei, daß Schwankungen der Reibbelagmischung durch die vorgeschlagene Prozeßregelung ausgeglichen werden können. Das Verfahren ermöglicht es ferner mehrere Pressen mit Hilfe eine Prozeßleitstandes zu betreiben.

## Patentansprüche

1. Verfahren zum Herstellen von Reibbelägen mit oder ohne Zwischenschicht durch Pressen der Reibmaterialmischungen in einer Form einer Presse in einem Preßvorgang mit mindestens einem Preßzyklus, mit einer Pressensteuerung, die mehrere Stellgrößen einzeln oder in Kombination zum Erreichen einer vorgegebenen Belageigenschaft der Reibbeläge steuert,
**dadurch gekennzeichnet,**
**daß** mindestens ein für die Belageigenschaft der Reibbeläge repräsentativer Kennwert in einem ersten Preßzyklus oder in mehreren Preßzyklen gemessen wird, und daß die Stellgrößen in Abhängigkeit des mindestens einen gemessenen Kennwertes für den aktuellen Preßzyklus, für die die nachfolgenden Preßzyklen und/oder für die nachfolgenden Preßvorgänge gesteuert werden.

2. Verfahren nach Anspruch 1, **dadurch gekennzeichnet, daß** als Stellgrößen der Weg des Preßstempels, der Stempeldruck, die Preß- und Lüftungszeit und die Preßtemperatur einzeln oder in Kombination verwendet werden.

3. Verfahren nach Anspruch 1 oder 2, **dadurch gekennzeichnet, daß** als zusätzliche Stellgrößen die Zusammensetzung der Reibmaterialmischung, insbesondere der Harzgehalt der Reibmaterialmischung, und/oder die Menge der Reibmaterialmischung und/oder die Menge einer die Zwischenschicht bildenden Reibmaterialmischung verwendet wird.

4. Verfahren nach einem der Ansprüche 1 bis 3, **dadurch gekennzeichnet, daß** der für die Belageigenschaft der Reibbeläge repräsentative Kennwert aus einer sich bei Messung des Stempeldrucks in Abhängigkeit von dem Weg des Preßstempels ergebenden Hysteresekurve eines oder mehrerer Preßzyklen gewonnen wird.

5. Verfahren nach Anspruch 4, **dadurch gekennzeichnet, daß** der Kennwert der Flächeninhalt (SA1, ... ,SAn)der Hysteresekurve ist.

6. Verfahren nach Anspruch 4, **dadurch gekennzeichnet, daß** der Kennwert der Fließweg des Preßstempels (SF1, ... ,SFn) nach Erreichen eines vorgegebenen maximalen Stempeldrucks ist.

7. Verfahren nach Anspruch 4, **dadurch gekennzeichnet, daß** der Kennwert der Maximalwert (SW1, ... ,SWn) des Stempelweges ist.

8. Verfahren nach Anspruch 4, **dadurch gekennzeichnet, daß** der Kennwert die Steigung des Entlastungskurvenabschnitts (ST1, ... ,STn) ist.

9. Verfahren nach einem der Ansprüche 1 bis 3, **dadurch gekennzeichnet, daß** der für die Belageigenschaft der Reibbeläge repräsentative Kennwert aus einer sich bei Messung des Stempeldrucks in Abhängigkeit von dem Radialdruck auf die Werkzeuginnenwand der Preßform ergebenden Hysteresekurve eines oder mehrerer Preßzyklen gewonnen wird.

10. Verfahren nach Anspruch 9, **dadurch gekennzeichnet, daß** der Kennwert der Flächeninhalt (MA1, ... ,MAn) der Hysteresekurve ist.

11. Verfahren nach Anspruch9, **dadurch gekennzeichnet, daß** der Kennwert der Maximalwert (MP1, ... ,MPn) des Radialdrucks auf die Werkzeuginnenwand der Form ist.

12. Verfahren nach Anspruch 9, **dadurch gekennzeichnet, daß** der Kennwert die Druckdifferenz (MF1, ... ,MFn) des Radialdrucks auf die Werkzeuginnenwand der Form nach Erreichen eines vorgegebenen maximalen Stempeldrucks ist.

13. Verfahren nach Anspruch 4 oder 9, **dadurch gekennzeichnet, daß** der Kennwert die Steigung eines vorbestimmten Kurvenabschnitts der Hystereseschleife ist.

14. Verfahren nach einem der Ansprüche 9 bis 13, **dadurch gekennzeichnet, daß** mit Hilfe der Messung der Ist-Preßzeit und der Messung des Radialdrucks auf die Werkzeuginnenwand in dem ersten Preßzyklus oder in jedem Preßzyklus ein vorbestimmter Druckaufbau und Druckabbau zeitlich geregelt wird.

15. Verfahren nach Anspruch 4 oder 9, **dadurch gekennzeichnet, daß** der Druckaufbau und die Druckentlastung der Hysteresekurve durch zeitliche Steuerung des Stempeldrucks derart geregelt wird, daß die Steigungen der Druckaufbaukurve und der Drukkentlastungskurve annähernd gleich sind.

16. Verfahren nach einem der Ansprüche 1 bis 15, **dadurch gekennzeichnet, daß** die Energieaufnahme der Reibmaterialmischung über eine Temperaturmessung in der Preßform gemessen wird und das Temperaturmeßsignal die Preßtemperatur als Stellgröße steuert.

17. Verfahren nach einem der Ansprüche 1 bis 15, **dadurch gekennzeichnet, daß** die Strahlungswärme des nach dem Preßvorgang ausgestoßenen Reibbelages gemessen wird und das Temperaturmeßsignal die Preßtemperatur als Stellgröße steuert.

18. Verfahren nach einem der Ansprüche 1 bis 15, **dadurch gekennzeichnet, daß** die elektrische Heizleistung der Presse gemessen wird, und daß das Meßsignal die Preßtemperatur als Stellgröße steuert.

19. Verfahren nach einem der Ansprüche 1 bis 18, **dadurch gekennzeichnet, daß** als Regelgröße die Kompressibilität, die Dichte, die E-Module in den drei Raumkoordinaten, die Maße des Reibbelages oder eine Kombination der vorgenannten verwendet werden.

20. Verwendung des Verfahrens nach einem der Ansprüche 1 bis 19 als Prüfverfahren für Reibbelagmischungen.

## Claims

1. Method for manufacturing friction linings with or without intermediate layer by compressing the friction material mixture in a mold of a press during a pressing process comprising at least one pressing cycle, with a press control unit which controls a plurality of manipulated variables individually or in combination with each other in order to attain a given lining property of the friction linings,
**characterized in that**
at least one characteristic value representative of the lining property of the friction linings is measured during a first pressing cycle or a plurality of pressing cycles, and the manipulated variables are controlled in dependence on the at least one measured characteristic value of the current pressing cycle, the subsequent pressing cycles and/or the subsequent pressing processes.

2. Method according to claim 1, **characterized in that** the path travelled by the pressing stamp, the stamping pressure, the pressing and venting times and the press temperature are used, individually or in combination with each other, as manipulated variables.

3. Method according to claim 1 or 2, **characterized in that** the composition of the friction material mixture, in particular the resin content of the friction material mixture, and/or the quantity of the friction material mixture and/or the quantity of a friction material mixture forming the intermediate layer are used as additional manipulated variables.

4. Method according to one of claims 1 to 3, **characterized in that** the characteristic value representative of the friction property of the friction linings is obtained from a hysteresis curve of one or a plurality of pressing cycles supplied by measurement of the stamping pressure in dependence on the path traveled by the pressing stamp.

5. Method according to claim 4, **characterized in that** the characteristic value is the area (SA1, ..., SAn) of the hysteresis curve.

6. Method according to claim 4, **characterized in that** the characteristic value is the flow path of the pressing stamp (SF1, ..., SFn) after a given maximum stamping pressure has been reached.

7. Method according to claim 4, **characterized in that** the characteristic value is the maximum value (SW1, ..., SWn) of the stamp path.

8. Method according to claim 4, **characterized in that** the characteristic value is the ascending slope of the relief curve section (ST1, ..., STn).

9. Method according to one of claims 1 to 3, **characterized in that** the characteristic value representative of the lining property of the friction linings is obtained from a hysteresis curve of one or a plurality of pressing cycles supplied by measurement of the stamping pressure in dependence on the radial pressure acting upon the tool inner wall of the pressing form.

10. Method according to claim 9, **characterized in that** the characteristic value is the area (MA1, ..., MAn) of the hysteresis curve.

11. Method according to claim 9, **characterized in that** the characteristic value is the maximum value (MP1, ..., MPn) of the radial pressure acting upon the tool inner wall of the mold.

12. Method according to claim 9, **characterized in that** the characteristic value is the pressure difference (MF1, ..., MFn) of the radial pressure acting upon the tool inner wall of the mold after a given maximum stamping pressure has been reached.

13. Method according to claim 4 or 9, **characterized in that** the characteristic value is the ascending slope of a predetermined curve section of the hysteresis loop.

14. Method according to one of claims 9 to 13, **characterized in that** a predetermined pressure build-up and pressure reduction are controlled in terms of time by means of measurement of the actual pressing time, and measurement of the radial pressure acting upon the tool inner wall during the first pressing cycle or in each pressing cycle.

15. Method according to claim 4 or 9, **characterized in that** the pressure build-up and the pressure relief of the hysteresis curve are controlled by time control of the stamp pressure such that the ascending slopes of the pressure-build-up curve and the pressure relief curve are almost identical.

16. Method according to one of claims 1 to 15, **characterized in that** the energy consumption of the friction material mixture is measured by temperature measurement in the press mold, and the temperature measuring signal controls the press temperature as a manipulated variable.

17. Method according to one of claims 1 to 15, **characterized in that** the radiation heat of the friction lining ejected after the pressing process is measured, and the temperature measuring signal controls the press temperature as a manipulated variable.

18. Method according to one of claims 1 to 15, **characterized in that** the electrical heating capacity of the press is measured, and the measuring signal controls the press temperature as a manipulated variable.

19. Method according to one of claims 1 to 18, **characterized in that** the compressibility, the density, the moduli of elasticity in the three space coordinates, the dimensions of the friction lining or a combination of the aforementioned parameters are used as controlled variable.

20. Application of the method according to one of claims 1 to 19 as a method for testing friction lining mixtures.

## Revendications

1. Procédé de fabrication de garnitures de friction avec ou sans couche intermédiaire par pressage des mélanges de matériaux de friction dans un moule d'une presse au cours d'un processus de pressage comportant au moins un cycle de pressage,
lequel procédé comporte une commande de pressage qui commande plusieurs grandeurs de réglage individuellement ou en combinaison afin d'obtenir une qualité de revêtement prédéterminée des garnitures de friction,
**caractérisé en ce que** au moins une valeur caractéristique représentative de la qualité de revêtement des garnitures de friction est mesurée dans un premier cycle de pressage ou dans plusieurs cycles de pressage, et **en ce que** les grandeurs de réglage sont commandées en fonction de l'au moins une valeur caractéristique mesurée pour le cycle de pressage en cours, pour les cycles de pressage suivants et/ou pour les processus de pressage suivants.

2. Procédé selon la revendication 1, **caractérisé en ce que** sont utilisées comme grandeurs de réglage la course du piston de presse, la pression du piston, le temps de pressage et de ventilation et la température de pressage, individuellement ou en combinaison.

3. Procédé selon la revendication 1 ou 2, **caractérisé en ce que** sont utilisées comme grandeurs de réglage supplémentaires la composition du mélange de matériaux de friction, en particulier la teneur en résine du mélange de matériaux de friction, et/ou la quantité du mélange de matériaux de friction et/ou la quantité d'un mélange de matériaux de friction formant la couche intermédiaire.

4. Procédé selon l'une des revendications 1 à 3, **caractérisé en ce que** la valeur caractéristique représentative de la qualité de revêtement des garnitures de friction est acquise à partir d'une courbe d'hystérésis d'un ou plusieurs cycles de pressage qui est obtenue par la mesure de la pression de piston en fonction de la course du piston de pressage.

5. Procédé selon la revendication 4, **caractérisé en ce que** la valeur caractéristique est l'aire (SA1, ..., SAn) de la courbe d'hystérésis.

6. Procédé selon la revendication 4, **caractérisé en ce que** la valeur caractéristique est le trajet de fluage du piston de pressage (SF1, ..., SFn) après qu'une pression de piston maximale prédéterminée a été atteinte.

7. Procédé selon la revendication 4, **caractérisé en ce que** la valeur caractéristique est la valeur maximale (SW1, ..., SW4) de la course du piston.

8. Procédé selon la revendication 4, **caractérisé en ce que** la valeur caractéristique est la pente de la portion de courbe de décharge (ST1, ..., STn).

9. Procédé selon l'une des revendications 1 à 3, **caractérisé en ce que** la valeur caractéristique représentative de la qualité de revêtement des garnitures de friction est acquise à partir d'une courbe d'hystérésis d'un ou plusieurs cycles de pressage qui est obtenue par mesure de la pression de piston en fonction de la pression radiale exercée sur la paroi intérieure d'outil du moule de pressage.

10. Procédé selon la revendication 9, **caractérisé en ce que** la valeur caractéristique est l'aire (MA1, ..., Man) de la courbe d'hystérésis.

11. Procédé selon la revendication 9, **caractérisé en ce que** la valeur caractéristique est la valeur maximale (MP1, ..., MPn) de la pression radiale exercée sur la paroi intérieure d'outil du moule.

12. Procédé selon la revendication 9, **caractérisé en ce que** la valeur caractéristique est la différence de pression (MF1, ..., MFn) de la pression radiale exercée sur la paroi intérieure d'outil du moule après qu'une pression de piston maximale prédéterminée a été atteinte.

13. Procédé selon la revendication 4 ou 9, **caractérisé en ce que** la valeur caractéristique est la pente d'une portion de courbe prédéterminée de la boucle d'hystérésis.

14. Procédé selon l'une des revendications 9 à 13, **caractérisé en ce qu'**une montée de pression et une réduction pression prédéterminées est régulée dans le temps en mesurant le temps de pressage réel et en mesurant la pression radiale exercée sur la paroi intérieure d'outil lors du premier cycle de pressage ou lors de chaque cycle de pressage.

15. Procédé selon la revendication 4 ou 9, **caractérisé en ce que** la montée de pression et la réduction de pression de la courbe d'hystérésis sont régulées en commandant dans le temps la pression de piston de telle sorte que les pentes de la courbe de montée de pression et de la courbe de réduction de pression sont à peu près égales.

16. Procédé selon l'une des revendications 1 à 15, **caractérisé en ce que** l'absorption d'énergie des mélanges de matériaux de friction est mesurée en mesurant une température dans le moule de pressage et le signal de mesure de température commande la température de commande en tant que grandeur de réglage.

17. Procédé selon l'une des revendications 1 à 15, **caractérisé en ce que** la chaleur de rayonnement de la garniture de friction dégagée après le processus de pressage est mesurée et le signal de mesure de température commande la température de pressage en tant que grandeur de réglage.

18. Procédé selon l'une des revendications 1 à 15, **caractérisé en ce que** la puissance de chauffage électrique de la presse est mesurée et **en ce que** le signal de mesure commande la température de pressage en tant que grandeur de réglage.

19. Procédé selon l'une des revendications 1 à 15, **caractérisé en ce que** sont utilisées comme grandeurs de réglage la compressibilité, la densité, le module d'élasticité dans les trois cordonnées spatiales, la masse de la garniture de friction ou bien une combinaison de celles-ci.

20. Utilisation du procédé selon l'une des revendications 1 à 19 comme procédé de test des mélanges de garniture de friction.
